# EUROPEAN PATENT APPLICATION

(11) **EP 4 797 175 A2**
(43) Date of publication of application: **26.08.2026**
(21) Application number: 26184654.7
(22) Date of filing: 10.10.2023
(51) Int. Cl.: G06Q 10/0635

(54) **SYSTEMS AND METHODS FOR OPERATING AUTONOMOUS VESSELS**

(30) Priority: 12.10.2022 NO 20221099
(62) Document number(s) of the earlier application(s) in accordance with Art. 76 EPC: 23800591.2 / 4 602 443
(71) Applicant: Zeabuz AS, 7042 Trondheim (NO)
(72) Inventor: TORBEN, Tobias Rye, 0454 Oslo (NO); SMOGELI, Oyvind Rasmussen, 7350 Buvika (NO)
(74) Representative: LIGL IP Consult AS

(57) **Abstract**

An on-board supervisory system for an autonomous waterborne vessel (101) comprises a self-diagnosis module (403), an online risk management module (404), and an operational mode management module (402). The self-diagnosis module (403) receives operational information from a vessel execution layer (203) and generates diagnostic information. The online risk management module (404) receives diagnostic information from the self-diagnosis module (403) and operational information from the vessel execution layer (203) and performs a risk assessment for the vessel (101). The operational mode management module (402) controls transitions between operational modes of the vessel based at least on the diagnostic information and the risk assessment.

A corresponding method is also disclosed.

## Description

### TECHNICAL FIELD

The present invention relates to operation of autonomous vessels. In particular the invention relates to a system and related methods for operating autonomous vessels that are in communication with a remote-control center which is capable of assisting the autonomous vessel, controlling the autonomous vessel, or handing control over to a human operator.

### BACKGROUND

Autonomy has received a lot of attention in the field of transportation for a number of years now. Focus is primarily on autonomous vehicles and two main tracks have been followed. One is the driver assistance systems that have been introduced in cars and trucks. These systems allow the driver to remain in control of the vehicle at all times but introduce various capabilities that provide assistance to the driver in specific situations. Examples include anti-lock braking systems, adaptive cruise control, lane keeping assist, parking assist, emergency braking systems, and more. The systems receive input from sensors such as radar, lidar, cameras, and wheel sensors, and include image recognition and other processing capabilities in order to recognize traffic signs, other vehicles, pedestrians, lane markings, etc. The actions performed by the systems range from simply warning the driver that the car is, for example, about to leave the lane, through assistance where the systems actively control some aspect of steering or braking, to fully autonomous procedures such as automatic parking. The different systems implemented in a vehicle are primarily designed to interact with or assist a human driver, not to interact with each other.

The other track focuses on fully autonomous vehicles that are without a driver and that are not remotely controlled. The most prominent example is shuttlebuses that operate at low speeds and only travel along a predefined route. In such fully autonomous vehicles different subsystems are designed to cooperate with each other, but one vehicle operates independently of other vehicles and is not remotely assisted or controlled from a common control system.

One area of transportation that has been less explored for autonomy is the maritime domain. Autopilots and various assist systems for larger ships have long been available, but urban waterways are dominated by relatively large ferries that are manually operated. Around the globe urban areas are growing. It is projected that 70% of the world's population will live in cities by 2050, an increase of 58% from today's 4.3 billion people to 6.8 billion (The World Bank, 2020). Humans tend to flock to the waterfront, and today 90% of urban areas are coastal (UN habitat, 2022). We also see a global trend where cities increasingly convert old industrial areas by the waterfront to attractive residential and commercial areas. A consequence of this development is that the current city transport infrastructure is about to reach its breaking point: there is simply not enough capacity on the roads to meet the growing demand for personal mobility and transport logistics; the latter being comprised of both parcels, food, materials, and other goods flowing into the cities and waste flowing out again. This challenge is further increased by the introduction of zero-emission zones and public demand for more sustainable transport solutions, a much-needed development given that cities already account for more than 70 % of global CO2 emissions (UN Environment Programme, 2022).

Today, urban waterways are often perceived as obstacles to transportation flow. They are crossed by bridges and tunnels that become bottlenecks for road-based mobility. However, there is a great and unrealized potential in these waterways as part of the solution for sustainable, livable cities. In order to achieve this, urban maritime transportation must become more flexible, more responsive to fluctuating needs, and introduce vessels of a larger range of sizes. At the same time the need for human operators must be reduced or removed in order to make such transportation scalable and economical. This means that urban maritime transportation will have to undergo the same transition towards autonomy as is currently being developed for land-based transportation. Consequently, there is a need for development of efficient systems for transportation on urban waterways, including safe, secure, and scalable autonomy for vessels operating on such waterways.

### SUMMARY OF THE DISCLOSURE

In order to address these needs a system has been provided for operating a plurality of autonomous vessels under the supervision of a remote-control center, wherein the vessels are configured to service a plurality of locations. The system includes communication interfaces configured to enable communication between the remote-control center and the respective autonomous vessels. In accordance with the invention the system is implemented as several layers as follows. A fleet coordination layer is implemented in a computer system associated with the remote-control center - which means that the computer system does not necessarily have to be located at the remote-control center, instead at least some of its components may be located remotely and accessible over a computer network. The fleet coordination layer includes at least one module configured to aggregate information relating to the operation of the autonomous vessels and perform risk assessment based on the aggregated information, and to monitor operational modes of the autonomous vessels and issue operational mode transition instructions to the autonomous vessels based on risk assessments.

A vessel coordination layer is implemented on the plurality of autonomous vessels and includes, on the respective autonomous vessels, an operational mode management module configured to control transitions between operational modes of the autonomous vessel in accordance with instructions received from the at least one module in the fleet coordination layer. A vessel execution layer is also implemented on the plurality of autonomous vessels and includes sensors, a perception, planning, and execution module and actuators, wherein the perception, planning, and execution module is configured to use the actuators to control the motion of the autonomous vessel in accordance with a mission description, received sensor data, and operational mode instructions from the operational mode management module. At least one module in the vessel coordination layer is configured to transmit information relating to operational mode to the remote-control center, and at least one module in the vessel execution layer is configured to transmit information relating to sensor data to the remote-control center. The transmitted information may then be included in the information aggregated by the at least one module in the fleet coordination layer.

The at least one module in the fleet coordination layer may in some embodiments be implemented using a monolithic architecture where the at least one module is a module with a neural network trained using machine learning. The neural network may take the aggregated data as input and produce output relating to risk assessments as well as operational mode transitions. This neural network may also be trained to receive additional information and generate additional output, for example related to logistics and resource utilization. In other embodiments the at least one module at the fleet coordination layer includes a networked online risk management module configured to aggregate the information relating to the operation of the autonomous vessels and perform risk assessment based on the aggregated information, and an operational mode coordination module configured to monitor the operational modes of the autonomous vessels, receive risk assessments from the networked online risk management module , and issue operational mode transition instructions to the autonomous vessels based on the received risk assessments.

Some embodiments of the invention include additional modules at the fleet coordination layer. In particular, a fleet coordination and optimization module may be configured to receive risk assessment information from the risk management module, information related to operational mode for the respective vessels from the vessel coordination layer and information relating to sensor data from the vessel execution layer. This module may be configured to use the received information to plan optimization of utilization of the autonomous vessels, and to issue mission descriptions to the autonomous vessels based on the planned optimization. Correspondingly, a mission planning and replanning module in the vessel coordination layer may be configured to receive mission descriptions from the fleet coordination layer and situational awareness information from the vessel execution layer, to plan or replan mission execution based on the received information, and to issue instructions to the perception, planning, and execution module.

In some embodiments the vessel coordination layer may include a self-diagnosis module configured to receive operational information from the vessel execution layer and to perform diagnostics based on the received information, and an online risk management module configured to receive operational information from the vessel execution layer, diagnostic information from the self-diagnosis module and risk assessment information from the fleet coordination layer and perform risk assessment. The operational mode management module may then be further configured to take diagnostic information from the self-diagnosis module and risk assessment information from the online risk management module as input when controlling transitions between operational modes. The operational information from the vessel execution layer may include information derived from data selected from the group consisting of sensor data, object detection data, situational awareness information, motion planning data, and motion control data.

In further embodiments of the invention the remote-control center may include a mode switch configured to receive user input instructing a transition to a remote-control operational mode and a remote-control interface configured to receive user input that is delivered directly to the vessel execution layer of one autonomous vessel allowing remote-control of that autonomous vessel by a human operator.

Various operational modes may be contemplated for autonomous vessels operating in a system according to the invention. system according to one of the preceding claims, wherein the operational modes in which an autonomous vessel may the operate are selected from the group consisting of: standby on location, regular autonomous operation, docked, departing, in transit, preparing to dock, docking, manual control, remote control, and minimum risk condition.

In embodiments of the invention, at least one risk management module may use a method selected from the group consisting of: an influence diagram, a Bayesian belief network, fuzzy logic, and reinforcement learning.

According to another aspect of the invention a method for operating a plurality of autonomous vessels under the supervision of a remote-control center is provided. The vessels are configured to service a plurality of locations, and the system includes communication interfaces configured to enable communication between the remote-control center and the respective autonomous vessels, a fleet coordination layer implemented in a computer system associated with the remote-control center, a vessel coordination layer implemented on the plurality of autonomous vessels, and a vessel execution layer implemented on the plurality of autonomous vessels. The method includes, in a fleet coordination layer implemented in the remote-control center: generating and distributing mission descriptions to the respective autonomous vessels, receiving and aggregating information relating to the operation of the autonomous vessels, performing risk assessment based on the aggregated information, monitoring operational modes of the autonomous vessels, and issue operational mode transition instructions to the autonomous vessels based on risk assessments. The method further includes, on the respective autonomous vessels, in a vessel coordination layer: controlling transitions between operational modes of the autonomous vessel in accordance with instructions received from the remote-control center and transmitting information relating to operational mode to the remote-control center. On the respective autonomous vessels, in a vessel execution layer: controlling the motion of the autonomous vessel in accordance with a received mission description, received sensor data, and operational mode instructions, and transmitting information relating to sensor data to the remote-control center.

Some embodiments may further comprise in the remote-control center at the fleet coordination layer, receiving information related to operational mode for the respective vessels from the vessel coordination layer and information relating to sensor data from the vessel execution layer, planning optimization of utilization of the autonomous vessels, and issuing mission descriptions to the autonomous vessels based on the planned optimization. The respective autonomous vessels at the vessel coordination layer may then receive mission descriptions from the fleet coordination layer and situational awareness information from the vessel execution layer, plan or replan mission execution based on the received information, and issue instructions to the vessel execution layer.

In some embodiments the method may include, at the vessel coordination layer receiving operational information from the vessel execution layer, generating diagnostic information based on the received information, receiving risk assessment information from the fleet coordination layer, and perform risk assessment based on the received operational information, the received risk assessment information, and the generated diagnostics information to generate risk assessment information for the vessel. The generated diagnostic information and the generated risk assessment information for the vessel may then be taken as input when controlling transitions between operational modes.

The operational information from the vessel execution layer may, for example, include information derived from data selected from the group consisting of: sensor data, object detection data, situational awareness information, motion planning data, and motion control data.

The operational modes in which an autonomous vessel may operate may be selected from the group consisting of: standby on location, regular autonomous operation, docked, departing, in transit, preparing to dock, docking, manual control, remote control, and minimum risk condition.

### BRIEF DESCRIPTION OF THE DRAWINGS

The above and further advantages of the systems and methods provided in accordance with the invention will now be explained in further detail by way of examples and with reference to the accompanying drawings, in which:
FIG. 1 is an overview of a system consistent with the principles of the invention;
FIG. 2 is a block diagram illustrating information flow between layers of a system consistent with the principles of the invention;
FIG. 3A-C show block diagrams of modules that may be implemented in embodiments of a vessel execution layer in a system according to the invention;
FIG. 4 shows a block diagram of modules that may be implemented in embodiments of a vessel coordination layer in a system according to the invention;
FIG. 5A-B show block diagrams of modules that may be implemented in embodiments of a fleet execution layer in a system according to the invention; and
FIG. 6 is a state diagram illustrating various states in which an autonomous vessel may be in according to some embodiments of the invention.

### DETAILED DESCRIPTION

The present invention represents a response to the need for more flexible urban transportation systems by focusing on more efficient use of urban waterways, and in particular on autonomous vessels for transportation of passengers and goods. This area of endeavor shares characteristics with similar developments related to autonomous vehicles such as cars as well as driver assistance systems for cars, but the marine environment also has a number of characteristics unique to it and these characteristics raise unique challenges but also provide unique possibilities. In this disclosure, the term vessel is intended to include, but not be limited to, ferry, taxi boat, hovercraft, or any other boat or watercraft intended for transportation of people or goods on urban waterways.

In the following description of various embodiments, reference will be made to the drawings, in which like reference numerals denote the same or corresponding elements. The drawings are not necessarily to scale. Instead, certain features may be shown exaggerated in scale or in a somewhat simplified or schematic manner, wherein certain conventional elements may have been left out in the interest of exemplifying the principles of the invention rather than cluttering the drawings with details that do not contribute to the understanding of these principles.

It should be noted that, unless otherwise stated, different features or elements may be combined with each other whether or not they have been described together as part of the same embodiment below. The combination of features or elements in the drawings are intended to facilitate understanding of the invention rather than limit its scope to specific embodiments, and to the extent that alternative elements with substantially the same functionality are shown in respective embodiments, they are intended to be interchangeable. However, for the sake of brevity no attempt has been made to disclose a complete description of all possible permutations of features. As such, the different drawings do not represent distinct embodiments in the sense that they are exclusive alternatives to each other. Instead, the drawings focus, for example, on different aspects or different levels of detail. Alternative embodiments to those shown in the drawings are arrived at by adding features, by removing features, or by configuring features in a different arrangement than that shown in the exemplary drawings. Unless features are explicitly identified as required or they functionally depend on each other to function they may be omitted, reconfigured, or made to interoperate with additional features not described herein, in any manner that is within the capabilities and knowledge of a skilled person having studied this disclosure. Similarly, if features are described with different levels of detail in sections referencing different drawings, this is not meant to imply that embodiments are constituted either by the lower level of detail or with the higher level of detail. Instead, details described with reference to one drawing are intended to be understood as being available but not necessarily mandatory in embodiments, such that none, some, or all features of a detailed example may be imported into a less detailed description unless otherwise stated or unless they clearly depend on each other for their intended operation. In other words, different aspects that include design choices are largely independent of each other and if one choice for one aspect influences choices that can be made for other aspects, this will be pointed out below. Otherwise, choices are independent, such that for example the choice of which sensors to use is independent of whether to choose a modular or an end-to-end approach to the autonomy system design.

Consequently, those with skill in the art will understand that the invention may be practiced without many of the details included in this detailed description. Conversely, some well-known structures or functions may not be shown or described in detail, in order to avoid unnecessarily obscuring the relevant description of the various implementations. The terminology used in the description presented below is intended to be interpreted in its broadest reasonable manner, even though it is being used in conjunction with a detailed description of certain specific implementations of the invention.

The terminology used in the description presented below is intended to be interpreted in its broadest reasonable manner, even though it is being used in conjunction with a detailed description of certain specific implementations of the invention. To the extent that terms like first, second, upper, lower, left, right, near, far, and so on are used, they are intended to primarily distinguish features from each other, and not to define an absolute relationship, except where the context dictates otherwise. It should also be noted that if it is explicitly stated that some part, component or module transmits (or receives) instructions, information or data to or from another part, component or module, this should be interpreted as an explicit statement of the implication that the other part, component or module performs the corresponding action of receiving (or transmitting).

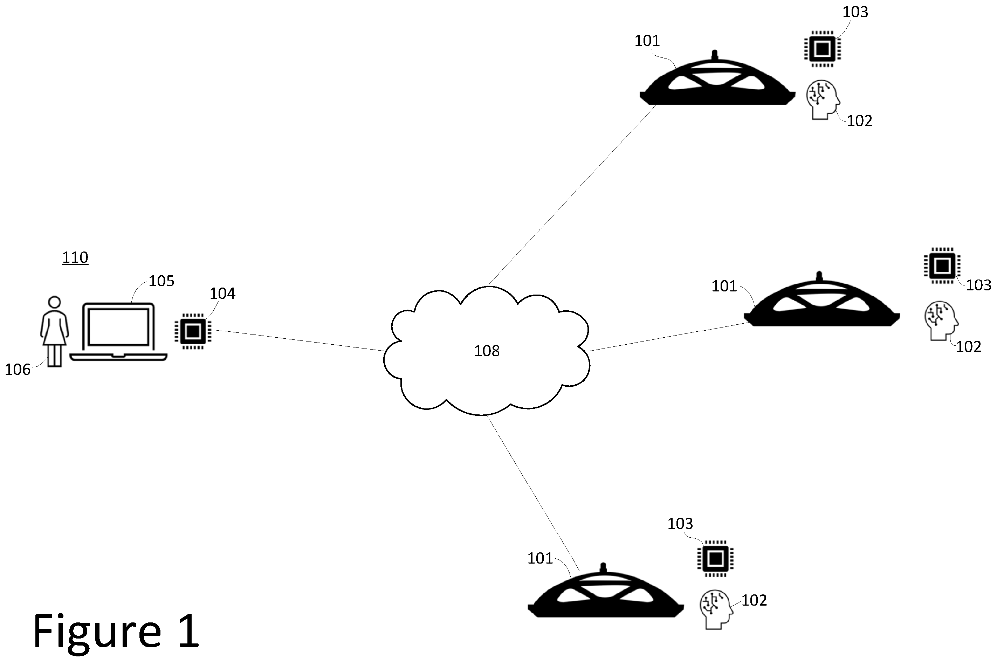

Reference is first made to FIG. 1, which gives an overview of a system including three autonomous vessels 101. These vessels 101 operate in the same urban waters. In some embodiments the vessels are configured to operate between the same destinations such that they all follow the same general route between destinations, only subject to variations caused by weather or moving obstacles (e.g., other boats) and differences depending on direction such that the vessels do not interfere with each other when they are moving in opposite directions between two destinations. In other embodiments the vessels 101 may operate between different destinations, or even update their destinations based on requests, such that route planning must be regularly revised and updated.

The vessels 101 are configured to operate autonomously and as such they include corresponding autonomy systems 102. The respective autonomy systems 102 are configured to perform basic operations associated with autonomy and automation. As such an autonomy system 102 includes or is connected to sensors that provide information about the environment, analytical capabilities that can analyze sensor input in order to establish situational awareness, i.e., a representation of the operation area including dynamic elements such as other marine traffic and obstacles, and perform motion planning in accordance with the situational awareness and the planned route or course. Automation includes the capability to perform motion control acts by steering the vessel according to commands generated from the motion planning.

The respective vessels 101 also include a supervisory control system 103. The supervisory control system 103 monitors system integrity and performs self-diagnostics on the vessel. Self-diagnostics is not necessarily limited to the autonomy system 102 as such but may also include monitoring of any other aspects of the vessel 101 and the environment and may also include manual input such as an alarm triggered by a passenger. The supervisory control system 103 performs risk assessment, mission planning and replanning, and operational mode management, as will be described in further detail below. The onboard supervisory control systems 103 are in communication with a corresponding remote supervisory control system 104. The remote supervisory control system 104, which may, for example, be located onshore or on a control center on a boat or some other floating installation, collaborates with the onboard supervisory control systems 103 and may in different situations (or different embodiments) assist the onboard supervisory control systems 103 in the performance of their tasks by performing requested operations or providing external data. Similarly, the remote supervisory control system 104 may, in some situations or embodiments, operate as a master supervisory control system configured to obtain data from the respective vessels 101 and from other sources of information, and to issues instructions to the onboard supervisory control systems 103. In some embodiments the remote supervisory control system 104 may be configured to integrate information from several vessels 101 in order to provide each vessel 101 with the ability to establish situational awareness based on information obtained by several vessels 101.

The remote supervisory system 104 may be part of a remote-control center 110. The remote-control center 110 may include a remote support computer 105. This computer 105 may implement additional functionality and also replicate some of the functions of the onboard autonomy systems 102 in order to provide remote redundancy that will allow the remote support computer 105 to provide a certain amount of remote control of a vessel 101 if the onboard system fails. The remote-control center 110 may provide additional functionality that will be described in further detail below. An overview of some possibilities include fleet optimization, which may allocate vessels to the route with the highest demand; networked situational awareness, which may utilized network knowledge to enable better decisions than vessels can make if only relying on information from their own sensors; acceptance and operational mode coordination; and remote control functions, including receiving and displaying situational awareness data from connected vessels and providing various levels of remote control. The remote-control center 110 may also include a human supervisor 106. The remote-control center 110 may for this purpose include a dashboard or other types of information displays and user input devices that will allow the human supervisor 106 to access system status information and issue instructions to one or more of the vessels individually or to the system as a whole.

The supervisory control system 103 as well as the remote supervisory system 104 may be implemented using different methods. Examples include, but are not limited to, rule-based control, hybrid control, dynamic decision networks (DDN) and mixed-integer model predictive control (MIMPC). These methods as such are known in the art and will not be described in detail herein. It should be noted that a given system may implement more than one type of method for supervision, and the onboard supervisory control system 103 and the remote supervisory system 104 do not have to implement the same methods. A system designer may freely choose among these and other suitable methods when implementing embodiments of the invention.

The vessels 101 and the remote-control center 110 are provided with communication capabilities that allow the vessels to be in communication with the remote-control center 110. In some embodiments the vessels 101 may also be able to communicate directly with each other. In the drawing the communication capabilities are generalized as a network cloud 108, but it should be understood that a number of different wireless communication standards may be utilized alone or in combination. The vessels may, for example, be in direct radio communication with the remote-control center 110, or they may be communicating via local or wide area access points, cellular (or mobile) network, satellite radio link, or any other suitable method known in the art.

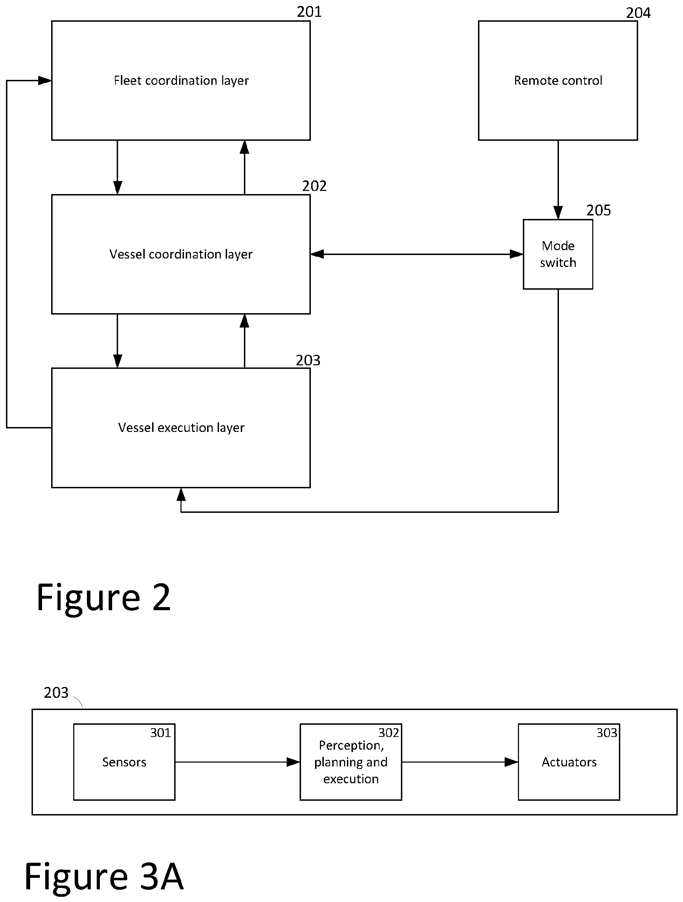

A more detailed description of the interaction and collaboration between the vessels 101 and the remote-control center 110 will now be given with reference to FIG. 2. This drawing is a block diagram which illustrates how the system as a whole operates concurrently at three different layers representing three levels of functionality. The highest layer can be referred to as a fleet coordination layer 201 and is implemented in the remote supervisory system 104. This layer controls the fleet as a whole and is capable of monitoring and supporting the individual autonomous vessels 101 based on information obtained from the fleet as a whole as well as external sources of information. Below the fleet coordination layer 201 is the vessel coordination layer 202. This layer is implemented primarily as part of the supervisory control system 103 in each vessel 101. The vessel coordination layer 202 is responsible for planning and execution of missions, self-diagnosis, and management of operational mode. The vessel coordination layer 202 receives instructions from the fleet coordination layer 201 and reports back to the fleet coordination layer 201.

A third layer is the vessel execution layer 203 which is mainly implemented as part of the autonomy system 102 on each vessel 101 of the fleet. The vessel execution layer includes the functionality associated with the autonomous activities performed by the vessel and includes sensors, interpretation of sensor data, and motion control based on instructions from the vessel coordination layer in combination with situational awareness based on sensor data. The vessel execution layer 203 is in continuous communication with the vessel coordination layer 202. In addition, the vessel execution layer may provide sensor data directly to the fleet coordination layer 201.

In addition to these three layers the system may include a remote-control interface 204. The remote-control interface 204 and associated functionality may be implemented on a computer 105 in the remote-control center 110. The remote-control interface 204 is in communication with a mode switch 205 on each vessel 101. An operator 106 may use the remote control 204 to instruct the mode switch 205 on any vessel to change to remote control mode in which case the vessel coordination layer 202 will be instructed to suspend control over the vessel execution layer 203 which instead will receive control signals directly from the remote control 204.

The implementation of functionality in the three layers described above provides flexibility and increased safety. The fleet coordination layer is capable of receiving information from all autonomous vessels 101 under its supervision and also from additional sources of information such as weather services, environmental sensors that are not part of any of the vessels 101, information regarding traffic and expected traffic (i.e., demand for transportation), and more. The fleet coordination layer 201 can therefore optimize and instruct based on information that is not available to individual vessels 101. The vessel coordination layer 202 is able to implement instructions received from the fleet coordination layer 201 and report back. The vessel coordination layer 202 therefore provides the local supervisory functionality that is common to autonomous vessels and vehicles, but in addition the layer is responsive to external supervision based on richer information. The vessel execution layer 203 likewise performs functions that are implemented in traditional autonomous vessels, and in addition it is responsive to and contributes to the advantages of collective control of a fleet of vessels which all contribute with sensor data and information about their positions and operational state.

The three layers will now be described in further detail. It should be understood that while each drawing represents an exemplary embodiment of a layer, the description should not be understood as a description of a specific embodiment where all features depend on each other and cannot be implemented without each other or in combination with additional features not shown in the drawings. Instead, the examples should be understood as embodiments that are selected for the purposes of providing readers with a good understanding of the invention including the possibilities of adding or removing features. Therefore, individual features only depend on each other to the extent they provide input or receive output from other features and that input or output is required in order to perform a particular task, or is otherwise stated explicitly as depending on a specific implementation of another feature. Any feature that a skilled person will understand may be removed without fundamentally disabling the system from operating in accordance with its principles should be considered as an optional feature unless it is described as mandatory herein or in the appended claims.

Reference is now made to FIG. 3A, which is a more detailed representation of the vessel execution layer 203. The drawing is a block diagram representing modules with related functionality and their exchange of information and/or instructions. The drawing only shows information exchange within the layer. Communication between layers is illustrated in FIG. 2.

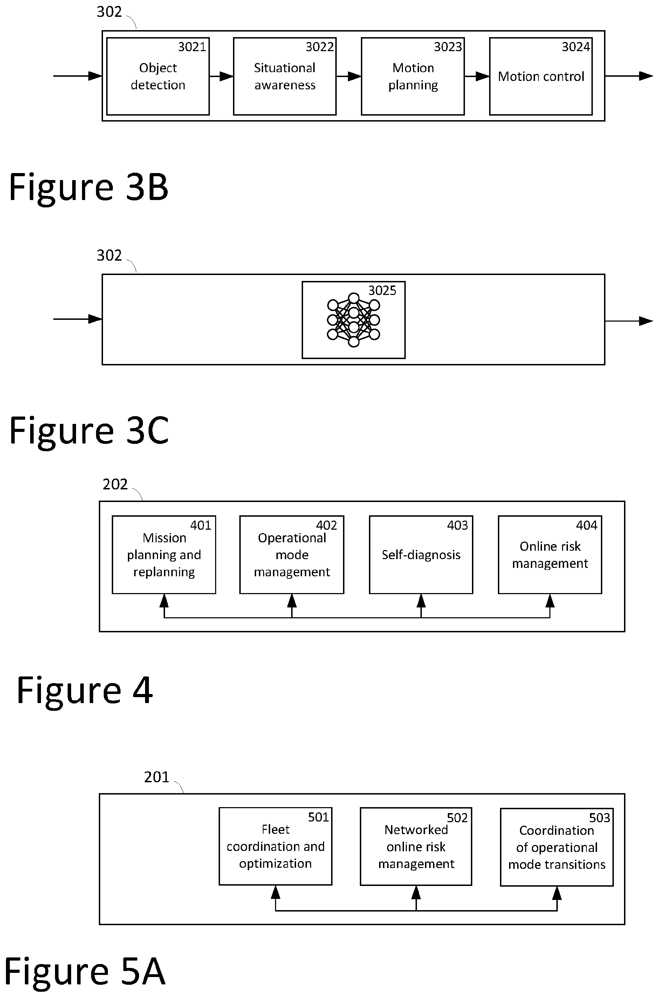

As mentioned above, the vessel execution layer 203 is implemented as part of the autonomy system 102 on each individual vessel 101. As such, the vessel execution layer includes a number of sensors 301. These sensors may include radar, lidar, RGB cameras, and IR cameras. Embodiments of the invention may exclude one or more of these types of sensors, or include additional types of sensors, based on system needs in a given use case scenario. The sensors are connected to a perception, planning, and execution module 302. The perception, planning, and execution module 302 may be implemented in a modular architecture or a more holistic end-to-end architecture. In embodiments implementing a modular architecture, the sensor module 301 provides input to a chain of self-contained modules that handle distinct tasks and provide data to each other. An example of a modular execution module 302 is shown in FIG. 3B which includes an object detection module 3021 where individual pipelines for each sensor are fed into the object detection module 3021 and used for object detection as well as determination of other environmental parameters (e.g., temperature, wave height, wind, currents, etc.). While sensor data from individual sensors may be sufficient for object detection, a subsequent situational awareness module 3022 may perform sensor fusion that integrates the individual detection pipelines and performs target tracking and projection as well as target classification and property identification. The situational awareness established by the situational awareness module 3022 may be forwarded to a motion planning module 3023. The motion planning module 3023 may then make navigational decisions, perform path planning, collision avoidance, auto-docking and other high level control functions. The high-level instructions generated by the motion planning module 3023 may then be forwarded to a motion control module 3024 with the necessary functionality for controlling position and motion. The motion control module 3024 may, for example, be based on a dynamic positioning (DP) system with necessary functions such as station-keeping, thrust allocation, auto-pilot and manual joystick control. The motion control module 3024 will provide output that controls an actuator module 303. The actuators may be, or they may physically control, such components as engines, rudders, thrusters, servos, etc. in order to control direction and speed of the vessel. The modular architecture may be readily monitored and interpreted, and therefore easily diagnosed in case of malfunction or unexpected behavior. The reason may be localized to a specific module and corrective action, adjustment or repair may be performed. For this reason, a modular architecture may be advantageous with respect to assurance and certification compared to end-to-end architectures.

As illustrated in FIG. 3C, some embodiments of the invention may implement an end-to-end approach instead of the modular approach. In end-to-end embodiments the perception, planning, and execution module 302 may, for example, be based on neural networks 3025 which receive data from the sensors 301 as input and provide output directly to the actuator module 303. The end-to-end architecture is realized by directly implementing the entire execution pipeline from processing input from the sensors 301 to generating commands to the actuators 303. In embodiments with neural networks 3025, machine learning is used to train the execution module 302 in order to enable it to respond to sensor input with actuator commands based on its training data. This approach results in a simpler architecture, but it becomes more difficult to diagnose unwanted behavior and malfunction, and more difficult to assure.

It will be understood that the pipeline of signal generation, processing and forwarding performed at the vessel execution layer 203 enables an autonomous vessel to perform basic autonomous operation based on short term situational awareness of the surroundings. In the vessel coordination layer 202, illustrated in further detail in FIG. 4, decisions and actions are made both short-term and medium term. This layer also deals with sources of information that are more disparate. For example, in addition to vessel positions, speed, orientation, and so on, the vessel coordination layer 202 may receive and utilize information relating to weather (including forecast), traffic and expected traffic, relative positions of fleet vessels, and more. In this example the vessel coordination layer 202 is illustrated as comprising four modules, all of which are capable of exchanging information with the other modules.

A first module is the mission planning and replanning module 401. This module receives situational awareness data and other status information from the vessel execution layer 203 as well as state and diagnostic information from the other modules in the vessel coordination layer. The mission planning and replanning module 401 may typically be instructed to perform a mission that has been defined in general terms in a mission description, for example, by a definition of a starting point and a destination, a timeframe within which to perform the mission, and a path or channel along/within which the vessel is allowed to move. Based on such parameters the mission planning and replanning module 401 maintains a mission execution plan which in some embodiments may be the local representation of the mission description supplemented with additional information and updates as appropriate. This execution plan may be used to generate instructions to the vessel execution layer 203 substantially in real time. In other embodiments the mission execution plan is much more detailed and includes preplanned instructions to the vessel execution layer 203. The mission planning and replanning module 401 instructs the vessel execution layer 203, particularly the motion planning module 304, with updated mission parameters. During operation, based on a changed situational awareness, changing operational mode, changing self-diagnostics or risk assessments, this module may replan the parameters of the mission and update the instructions to the vessel execution layer 203.

A second module of the vessel coordination layer is the operational mode management module 402. The operational mode management module 402 may receive as input, and base its decisions, on situational awareness, diagnostic information, and risk assessment, and make decisions regarding the state of operation for the vessel 101. The state may be one of several operational modes related to performance of the mission, such as docked or in transit, or it may be an exceptional state related to a situation requiring extraordinary measures, such as an emergency. Emergencies may be handled by entering a minimum risk condition (MRC).

The mission planning and replanning module 401 and the operational mode management module 402 may be implemented using methods such as rule-based control, hybrid control, reinforcement learning, or MIMPC. The invention is, however, not limited to these methods.

A self-diagnosis module 403 may be configured to receive one or more of vessel system data, sensor data, situational awareness data, operational mode information and more and to perform diagnostics based on this information. Output from the self-diagnosis module 403 may indicate that all systems are go, or that deviations (e.g., unexpected information in view of operational status) indicate that a component, a sub-system, or the vessel 101 as a whole is malfunctioning or otherwise not performing as expected. The self-diagnosis module 403 may be implemented based on Deep Neural Networks (DNN), Model-based observers, Discrete-event systems, or other methods known in the art.

An online risk management module 404 is configured to receive one or more of situational awareness information, self-diagnosis data, environmental information, and other relevant data in order to perform risk assessment. If the risk management module 404 determines that the risk to the vessel 101 is too high, it may share this information with the operational mode management module 402 and/or the mission planning and replanning module 401 which in turn may decide to replan the mission or enter a minimum risk condition. The risk management module 404 may be implemented using one or more techniques such as Bayesian Belief Networks (BBN), dynamic decision networks, fuzzy logic, and reinforcement learning. These techniques as such are well known in the art and will not be explained in further detail herein.

As already mentioned, the modules in the vessel coordination layer 202 receive information from the vessel execution layer 203 and may issue instructions to the vessel execution layer. The modules in the vessel coordination layer 202 will also report their data to the fleet coordination layer 201, and they may receive instructions from the fleet coordination layer 201. The vessel coordination layer 202 may, for example, report risk assessment, and diagnostic and operational status, and also provide the fleet coordination layer 201 with information relating to planning.

As mentioned with reference to FIG. 2, if the vessel 101 is currently being controlled by remote control 204, instructions may be received from the remote-control interface 204 via the mode switch 205. The operational mode management module 402 may be configured to conclude that the vessel 101 needs to enter an operational mode where it is being controlled remotely whether by autonomous functionality in the fleet coordination layer 201 or by a human operator 106 using the remote-control interface 204. However, the operational mode management module 402 should only be able to request a remote-control mode, and not switch to remote control mode directly. The reason is that if there is no operator 106 ready to assume control, or if the fleet coordination layer 201 is incapable of providing the requested guidance, the vessel 101 should not be able to transition to a mode where it is dependent on input that is not available. In such situation the operational mode management module 402 should rather make the transition into another MRC not requiring external input.

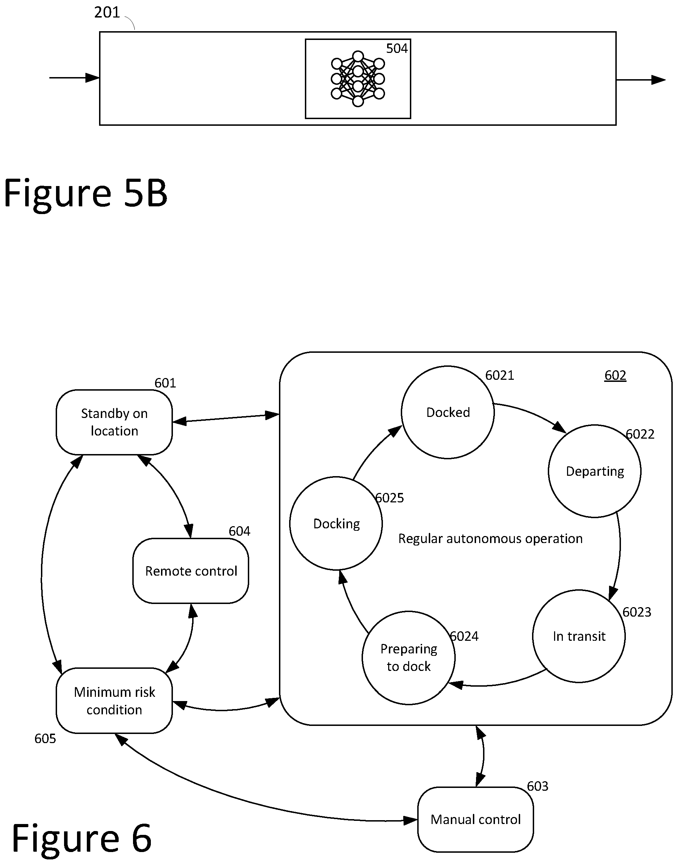

The fleet coordination layer 201 is shown in greater detail in FIG. 5. As with the vessel execution layer, this layer may be implemented using a modular architecture or a monolithic approach. With respect to the fleet coordination layer 201 the term monolithic means substantially the same as the term end-to-end in terms of technical implementation, but while an end-to-end approach implies a clear pipeline from sensor input to actuator output, the fleet coordination layer 201 may be more complex where input at least to some extent may be states that may also be influenced by output, which is why the term monolithic is preferred. An end-to-end approach may be understood as a special case of a monolithic approach.

FIG. 5A illustrates a modular approach wherein this layer includes a fleet coordination and optimization module 501, a networked online risk management module 502 and an operational mode transition coordination module 503. This is the highest supervisory layer for the network of vessels and may be configured to operate in cooperation with a human safety supervisor. The modules in this layer exchange information with each other, and they receive input from the lower layers 202 and 203 as described above. The modules in the fleet coordination layer may also receive additional information relating to the environment or other conditions such as weather, current and expected traffic, etc. Instructions are issued by the modules in the fleet coordination layer 201 to the vessel coordination layer 202. Communication between the fleet coordination layer 201 and the vessel execution layer 203 is mainly a question of providing a flow of sensor data and other status information from the vessel execution layer 203 to the fleet coordination layer 203. In the main, the fleet coordination layer 201 does not issue commands directly to the vessel execution layer 203. However, it is consistent with the principles of the invention to include autonomous remote-control functionality in the remote-control center 110, and in that case, it becomes a semantic, not a technical, question whether such functionality is part of the fleet coordination layer 201. Consequently, none of the disclosure herein is intended to exclude or prohibit issuance of instructions or commands from the fleet coordination layer 201 directly to the vessel execution layer 203. Instead, the point is that the design is intended to establish a system where operational control of the vessel execution layer is mainly handled locally on each separate vessel 101, and fleet coordination and control is mainly handled centrally in the form of instructions given to the local (on-board) implementation of the vessel coordination layer 202.

The fleet coordination and optimization module 501 provides functionality associated with utilization of the resources of the fleet of vessels 101 as a whole. Some embodiments of the invention may not implement this module or implement only some of the features that are possible. This module may, for example, provide functionality associated with logistics and capacity utilization. Based on input of current traffic load and estimates of expected traffic the fleet coordination and optimization module 501 may optimize routes (which destinations to service and which routes to follow), departure and arrival times, transfer vessels from one route to another, and similar tasks. This planning may result in new or updated missions for individual vessels 101 and instructions to that effect may be transferred to the affected vessels where the mission planning and replanning module 401 will have to perform the necessary replanning based on the received instructions. The fleet coordination and optimization module 501 may also be configured to instruct several vessels to cooperate, for example, by instructing one vessel to assist another. The fleet coordination module may be implemented, for example, based on rule-based control, hybrid control, reinforcement learning or MIMPC.

The networked online risk management module 502 is similar to the online risk management modules 404 implemented in each vessel 101, and it may be configured to communicate with these modules. However, for the networked online risk management module 502 emphasis is not on specific risks to individual vessels, although the module may be configured to perform such risk assessment as well. Instead, emphasis is made on aggregate information from the fleet as a whole as well as from other sources, in order to identify risks that would otherwise not be apparent to the online risk management modules 404 on individual vessels 101. For example, aggregate information from the fleet relating to currents or objects in the water may reveal risks that can be assessed and shared with the respective vessels 101 to the extent that an identified risk is relevant to any given vessel based on, for example, position, mission, and individual capabilities and operational status. Like the online risk management module 404 described above, the networked online risk management module 502 may be implemented using BBN, dynamic decision network or fuzzy logic, as well as other suitable methods known in the art.

An operational mode coordination module 503 keeps track of the operational mode of all vessels 101 in the fleet based on data received from the vessel coordination layer 202 of the respective vessels, typically from the operational mode management module 402. The operational mode coordination module 503 may be configured to override mode decisions made by the autonomy system on individual vessels for example based on external risks determined by the networked online risk management module 502 or based on fleet requirements determined by the fleet coordination and optimization module 501. The coordination module 503 may also be responsible for handling a set of general operational modes, for example regular autonomous operation, docked at quay, standby on location, manual control, remote control, and minimum risk condition. Some of these modes may include sub-modes that are controlled by the operational mode management module 402 on board. For example, the regular autonomous operational mode may include the sub-modes docking, departing, and in transit. And the minimum risk condition may include different states based on different level and nature of the condition that made minimum risk condition necessary, as determined by on-board sensors 301 and situational awareness 303. The operational mode coordination module 503 may, like the operational mode management module on the vessel coordination layer 202, be implemented, for example, based on rule-based control, hybrid control, reinforcement learning or MIMPC.

FIG. 5B shows a monolithic implementation of the fleet coordination layer 201. In embodiments where the fleet coordination layer 201 is implemented with this approach there is only one fleet coordination module 504 comprising a neural network trained using machine learning. As with the vessel execution layer, a single module trained with machine learning may make diagnostics of unwanted behavior or malfunction more difficult. The requirements may be different in this layer than in the vessel execution layer, both with respect to the nature of the input and the criticality of the output. Some embodiments may therefore implement a modular approach on one of these layers and an end-to-end solution on the other.

FIG. 6 shows an example of a state diagram that may be representative of the operational modes in which different embodiments of the invention may implement. It will be understood that this is an example and that other possibilities are consistent with the principle of the invention. In this exemplary embodiment the operational mode coordination module 503 in the fleet coordination layer 201 is responsible for a number of high-level modes while the operational mode management module 402 in the vessel coordination layer 202 handles specific modes during autonomous operation.

A first operational mode is a general or default mode where the vessel 101 is in standby mode 601 on location. The standby on location mode 601 may be an operational mode wherein systems are operational but only in order to maintain a current state. For example, if docked the vessel 101 may simply have activated systems that are collecting sensory data, establishing a situational awareness, and remaining in communication with the on-shore systems. If this operational mode is entered during transit, thrusters may also be engaged and controlled in order to maintain a current position.

From the standby on location mode 601 the operational mode coordination module 503 may instruct the on-board operational mode management module 402 to enter regular autonomous operation 602. This mode may have a number of sub-modes that are controlled directly by the operational mode management module 402 and not normally interfered with from the fleet coordination layer 201. These modes may include docked 6021, departing 6022, in transit 6023, preparing to dock 6024, and docking 6025. During normal operation a vessel 101 will go through these operational modes sequentially while servicing two or more locations. However, some embodiments may enable direct transition from departing 6022 to preparing to dock 6024, for example, in order to enable efficient abort of departure if some exception should occur as determined by the situational awareness module 303 or instructed from the fleet coordination layer 201.

In the illustrated embodiment the operational mode may transition back from regular autonomous operation 602 to standby on location 601. If this should occur in any other operational sub-mode than docked 6021 the vessel may use its thrusters to remain in its current position. From the regular autonomous operational mode 602 the vessel 101 may also transition to manual control 603. This mode is one where an operator on board takes control of navigation using on-board control systems and operates the vessel 101 much like a normal, non-autonomous vessel. When the on-board operator releases control the operational mode will transition back to regular autonomous operation 602.

It should be noted that manual control cannot simply be instructed from the operational mode coordination module 503, since this mode depends on the actual presence of a human operator who is able and willing to assume control. Embodiments may therefore allow the operational mode coordination module 503 to request this transition, but not enforce it. Some embodiments may allow an on-board operator to initiate this operational mode transition directly, while other embodiments may require approval from the operational mode coordination module 503 in the fleet coordination layer or from an on-shore human operator 106.

From the standby on location mode 601 the operational mode may also transition to remote control operation 604 which is an operational mode where a human operator 106 uses the remote-control interface 204 to control the vessel 101. As with the manual control operational mode 603 the remote-control operational mode 604 can only be requested by the system and requires acceptance from a human operator.

A final operational mode in this example is minimum risk condition 605. Since an autonomous vessel 101 like a vessel may be in transit and exposed to external forces and events that are both unavoidable and beyond control, there may be no actual safe state for the system. A minimum risk condition 605 is an operational state in which external conditions as well as system status is considered and the system will attempt to maintain a status in which all risks are minimized, or at least where the trade-off between different risks is optimized. This may to a large extent depend on the current situation. For example, a minimum risk condition while docked may be very different from a minimum risk condition while in transit, and a minimum risk condition in bad weather but all systems operational may be very different from a minimum risk condition in stable weather but with thrusters that are not operational. Consequently, the minimum risk condition 605 may, just like the regular autonomous operation 602, include a number of different sub-modes. Whether transition to the minimum risk condition mode 605, and between sub-modes in this condition, should be controlled by the operational mode coordination module 503 or by the operational mode management module 402 may vary between embodiments. In some embodiments the system may implement redundancy in order to ensure that the vessel 101 is able to enter and manage the minimum risk condition mode 610 if it loses communication with the fleet coordination layer 201 while the operational mode coordination module 503 is able to control and override if it has better information than the vessel coordination layer 202.

In the example in FIG. 6, minimum risk condition mode 605 may be entered from all other modes. This mode may be initiated by the operational mode coordination module 503, the on-board operational mode management module 402, by a remote control 204 operator 106, or by an on-board operator from the manual control mode 603.

Transition from regular autonomous operational mode 602 to remote control mode 604 is shown as passing through the standby on location mode 601. This is simply a design choice in order to avoid abrupt changes in motion or navigational parameters. The same could have been implemented between regular autonomous operation 602 and manual control 603, but the example assumes that this is not the case since manual control on-board may be assumed because of a sudden emergency which requires immediate action. However, it should be understood that any embodiment of the invention may be modified to include additional or fewer operational modes than those illustrated in FIG. 6 and that transitions between modes may be subject to different state transitions than those shown.

## Claims

1. An on-board supervisory system for an autonomous waterborne vessel (101), the on-board supervisory system comprising:
a self-diagnosis module (403) configured to receive operational information from a vessel execution layer (203) of the autonomous waterborne vessel and to generate diagnostic information based on the received operational information;
an online risk management module (404) configured to receive diagnostic information from the self-diagnosis module (403) and operational information from the vessel execution layer (203) and to perform a risk assessment for the autonomous waterborne vessel; and
an operational mode management module (402) configured to control transitions between operational modes (601-605) of the autonomous waterborne vessel based at least on the diagnostic information and the risk assessment;
wherein the operational information from the vessel execution layer (203) includes information derived from data selected from the group consisting of: sensor data, object detection data, situational awareness information, motion planning data, and motion control data.

2. A system according to one of the preceding claims, wherein the operational modes (601-605) in which an autonomous vessel (101) may operate include one or more of: standby on location (601), regular autonomous operation (602), docked (6021), departing (6022), in transit (6023), preparing to dock (6024), docking (6025), manual control (603), remote control (604), and minimum risk condition (605).

3. A system according to one of the preceding claims, wherein the online risk management module (404) uses a method selected from the group consisting of: an influence diagram, a Bayesian belief network, a dynamic decision network, fuzzy logic, and reinforcement learning.

4. A system according to one of the preceding claims, further comprising a communication interface (108) configured to enable communication between the autonomous waterborne vessel (101) and at least one of a remote-control center (110) and another autonomous waterborne vessel, wherein the on-board supervisory system is configured to use the communication interface (108) to transmit or receive at least one of operational information, diagnostic information, risk assessment information, operational mode information, and operational mode transition information.

5. A system according to one of the preceding claims, wherein the situational awareness information includes information selected from the group consisting of: object detection, object tracking, object classification, and environmental parameters.

6. A system according to one of the preceding claims, further comprising a mission planning and replanning module (401) configured to receive situational awareness information from the vessel execution layer (203), to plan or replan mission execution based on the received information, and to issue instructions to the perception, planning, and execution module (302).

7. A system according to one of the preceding claims, wherein the self-diagnosis module (403) is further configured to receive at least one of vessel system data and operational mode information.

8. A system according to one of the preceding claims, wherein the online risk management module (404) is further configured to receive one or more of environmental information, and risk assessment information from a fleet coordination layer (201).

9. A system according to one of the preceding claims, wherein the operational mode management module (402) is implemented using rule-based control, hybrid control, reinforcement learning, or mixed-integer model predictive control.

10. A method in an on-board supervisory system for an autonomous waterborne vessel (101), comprising:
receiving, by a self-diagnosis module (403), operational information from a vessel execution layer (203) of the autonomous waterborne vessel (101);
generating, by the self-diagnosis module (403), diagnostic information based on the received operational information;
receiving, by an online risk management module (404), the diagnostic information from the self-diagnosis module (403) and operational information from the vessel execution layer (203);
performing, by the online risk management module (404), a risk assessment for the autonomous waterborne vessel (101); and
controlling, by an operational mode management module (402), transitions between operational modes (601-605) of the autonomous waterborne vessel (101) based at least on the diagnostic information and the risk assessment;
wherein the operational information from the vessel execution layer (203) includes information derived from data selected from the group consisting of: sensor data, object detection data, situational awareness information, motion planning data, and motion control data.

11. A method according to claim 10, wherein the operational modes (601-605) in which the autonomous waterborne vessel (101) may operate include one or more of: standby on location (601), regular autonomous operation (602), docked (6021), departing (6022), in transit (6023), preparing to dock (6024), docking (6025), manual control (603), remote control (604), and minimum risk condition (605).

12. A method according to claim 10 or 11, wherein performing the risk assessment comprises using a method selected from the group consisting of: an influence diagram, a Bayesian belief network, a dynamic decision network, fuzzy logic, and reinforcement learning.

13. A method according to one of the claims 10 to 12, further comprising using a communication interface (108) to communicate between the autonomous waterborne vessel (101) and at least one of a remote-control center (110) and another autonomous waterborne vessel, wherein the method comprises transmitting or receiving, using the communication interface (108), at least one of operational information, diagnostic information, risk assessment information, operational mode information, and operational mode transition information.

14. A method according to one of the claims 10 to 13, wherein the situational awareness information includes information selected from the group consisting of: object detection, object tracking, object classification, and environmental parameters.

15. A method according to one of the claims 10 to 14, further comprising:
receiving, by a mission planning and replanning module (401), situational awareness information from the vessel execution layer (203);
planning or replanning mission execution based on the received information; and
issuing instructions to the perception, planning, and execution module (302).

16. A method according to one of the claims 10 to 15, further comprising receiving, by the self-diagnosis module (403), at least one of vessel system data and operational mode information.

17. A method according to one of the claims 10 to 16, further comprising receiving, by the online risk management module (404), environmental information and/or risk assessment information from a fleet coordination layer (201).

18. A method according to one of the claims 10 to 17, wherein controlling transitions between operational modes is performed using rule-based control, hybrid control, reinforcement learning, or mixed-integer model predictive control.

19. A method according to one of claims 10 to 18, further comprising causing, by the operational mode management module (402), the autonomous waterborne vessel (101) to enter a minimum risk condition (605) based on the risk assessment.
